# DEMANDE DE BREVET EUROPEEN

(11) **EP 3 168 570 A1**
(43) Date de publication de la demande: **17.05.2017**
(21) Numéro de dépôt: 15290286.2
(22) Date de dépôt: 10.11.2015
(51) Int. Cl.: G01B 21/30, B21B 38/02, G01B 5/28

(54) **MÉTHODE DE MESURE DE PLANÉITÉ D'UN PRODUIT MÉTALLIQUE ET DISPOSITIF ASSOCIÉ**

(71) Demandeur: Primetals Technologies France SAS, 42600 Savigneux (FR)
(72) Inventeur: BOUBY, Sébastien, F-42600 Savigneux (FR); TELLIER, Dominique, F-42600 Savigneux (FR); TURCHET, Florian, F-42600 Savigneux (FR)
(74) Mandataire: Metals@Linz

(57) **Abrégé**

La présente invention décrit une méthode de mesure de planéité d'un produit métallique et un dispositif associé. Il est ainsi proposé une méthode de mesure de planéité d'un produit métallique (1), de type bande en défilement (D) sous traction sur un ensemble (2) de mesure de planéité de type déflecteur dudit produit, idéalement constitué par au moins un rouleau mesureur (RM) induisant une déflection du produit dans le sens de défilement, la mesure dé planéité étant effectuée par une mesure de tension longitudinale sur une zone de déflection (5) dudit produit, le produit ayant des propriétés de déformation au moins plastiques ou élastoplastiques, caractérisée en ce que la mesure de planéité se compose des étapes suivantes :
- une première valeur de mesure de tension longitudinale (T1) est obtenue au moyen du rouleau mesureur,
- un modèle de contrainte sur l'épaisseur de la bande est déterminé en fonction de conditions de déformation plastique ou élasto-plastique du produit sur le rouleau mesureur dans la zone de déflection,
- un calcul d'un facteur de correction de déformation longitudinale (Z1) du produit est réalisé selon le modèle déterminé de contrainte,
- une valeur corrective (T1', T2') de la première valeur de mesure de tension longitudinale (T1) est calculée à au moins un point d'évaluation (M1, M2) en fonction du facteur de correction de déformation longitudinale (Z1),
- une valeur corrigée de mesure de planéité (PC) est calculée à au moins un des dits points d'évaluation (M1, M2) en prenant en compte la valeur corrective.

## Description

La présente invention concerne une méthode de mesure de planéité d'un produit métallique et un dispositif associé selon le préambule respectivement de la revendication 1 et de la revendication 7.

Depuis de nombreuses années, des méthodes et dispositifs de mesure de planéité d'un produit métallique sont connus dans l'état de l'art.

En particulier, la demanderesse a déjà mis au point une méthode et un dispositif de mesure de planéité d'un produit métallique, de type bande en défilement sous traction sur un ensemble de mesure de planéité de type déflecteur dudit produit, idéalement constitué par au moins un rouleau mesureur (par exemple un rouleau connu sous la marque Planicim^{®}) induisant une déflection du produit dans le sens de défilement, la mesure de planéité étant effectuée par une mesure de tension longitudinale sur une zone de déflection (5) dudit produit. Le rouleau Planicim^{®} ou tout autre type de rouleau mesureur de planéité mesure la répartition de la traction dans la largeur d'une bande sous traction et traduit cette mesure directement en une valeur de déviation de planéité (évaluée en unités dites « UI »), équivalente à une notion sans traction associée de la planéité de variation de longueur d'une fibre longitudinale de la bande. Ce type de mesure de planéité fonctionne parfaitement pour des produits ayant des propriétés de déformation à caractère élastiques telle qu'une bande métallique laminée ou planée à froid. Toutefois, dès lors que le produit possède des propriétés de déformation à caractère au moins plastiques ou élasto-plastiques, par exemple pour un produit laminé ou plané à chaud, il s'avère que des effets de déformation de la bande sur le rouleau induisent un profil de contrainte complexe ayant pour conséquence de biaiser la mesure réelle de planéité de la dite bande. Le document EP1199543B1 aborde cette problématique en citant le document EP-A-0858845 proposant de placer un rouleau mesureur dans une ligne de laminage à chaud d'une bande sous traction. Cependant, même dans le cas d'un métal non-_ferreux tel que l'aluminium, la bande à chaud se trouve à une température élevée et il en résulte des perturbations dans les mesures qui doivent être compensées. On peut, par exemple, effectuer un étalonnage du rouleau à diverses températures pour apporter aux mesures les corrections nécessaires en fonction de la température de la bande mais un tel étalonnage n'est pas facile à réaliser. Afin d'éviter un tel étalonnage, le document EP1199543B1 apporte une solution de refroidissement dudit rouleau mesureur. Certes, cette solution avantageuse aide à améliorer la mesure intrinsèque du rouleau, il n'en reste pas moins qu'elle ne peut efficacement améliorer l'erreur de mesure liée à des propriétés plastiques ou élasto-plastiques d'une bande sous traction se déformant au passage sur un secteur angulaire du rouleau mesureur.

Un but de la présente invention est de proposer une méthode de mesure plus exacte de planéité d'un produit métallique, de type bande en défilement sous traction sur un ensemble de mesure de planéité de type déflecteur dudit produit, idéalement constitué par au moins un rouleau mesureur induisant une déflection du produit dans le sens de défilement, la mesure de planéité étant effectuée par une mesure de tension longitudinale sur une zone de déflection dudit produit, le produit ayant des propriétés de déformation au moins plastiques ou élasto-plastiques.

Une solution sous forme de méthode de mesure de planéité est apportée au travers des caractéristiques de la revendication 1.

Il est ainsi proposé une méthode de mesure de planéité d'un produit métallique, de type bande en défilement sous traction sur un ensemble de mesure de planéité de type déflecteur dudit produit, idéalement constitué par au moins un rouleau mesureur induisant une déflection du produit dans le sens de défilement, la mesure de planéité étant effectuée par une mesure de tension longitudinale sur une zone de déflection dudit produit, le produit ayant des propriétés de déformation au moins plastiques ou élastoplastiques, caractérisée en ce que la mesure de planéité se compose des étapes suivantes :
- une première valeur de mesure de tension longitudinale est obtenue au moyen du rouleau mesureur,
- un modèle de contrainte sur l'épaisseur de la bande est déterminé en fonction de conditions de déformation plastique ou élasto-plastique du produit sur le rouleau mesureur dans la zone de déflection,
- un calcul d'un facteur de correction de déformation longitudinale du produit est réalisé selon le modèle déterminé de contrainte,
- une valeur corrective de la première valeur de mesure de tension longitudinale est calculée à au moins un point d'évaluation en fonction du facteur de correction de déformation longitudinale,
- une valeur corrigée de mesure de planéité est calculée à au moins un des dits points d'évaluation en prenant en compte la valeur corrective.

Egalement, un dispositif de mesure de planéité pour mettre en oeuvre ladite méthode selon l'invention est proposé au travers de la revendication 7.

Ce dispositif de mesure de planéité d'un produit métallique de type bande en défilement sous traction, ledit produit ayant des propriétés de déformation au moins plastique ou élastoplastique, le dit dispositif comprenant un ensemble de mesure de planéité de type déflecteur dudit produit, idéalement constitué par au moins un rouleau mesureur induisant une déflection longitudinale du produit, se caractérise en ce qu'il comprend un module de correction de mesure de planéité auquel au moins une valeur corrigée de mesure de planéité du dit produit à son passage sur au moins le rouleau mesureur est transmise, la dite valeur corrigée étant obtenue par mise en oeuvre de la méthode de mesure selon l'invention.

Un ensemble de sous-revendications présente également des avantages de l'invention.

Des exemples de réalisation et d'application selon l'invention sont fournis à l'aide de figures décrites :
- Figure 1: Profil de déformation suivant l'épaisseur de bande au passage sur un rouleau mesureur,
- Figure 2: Profil de contrainte suivant l'épaisseur de bande de type élastique au passage sur le rouleau mesureur,
- Figure 3: Profil de contrainte suivant l'épaisseur de bande de type plastique ou élasto-plastique au passage sur le rouleau mesureur,
- Figure 4: Premier mode de réalisation pour une mise en oeuvre de la méthode selon l'invention,
- Figure 5: Deuxième mode de réalisation pour une mise en oeuvre de la méthode selon l'invention,
- Figure 6: Troisième mode de réalisation pour une mise en oeuvre de la méthode selon l'invention.

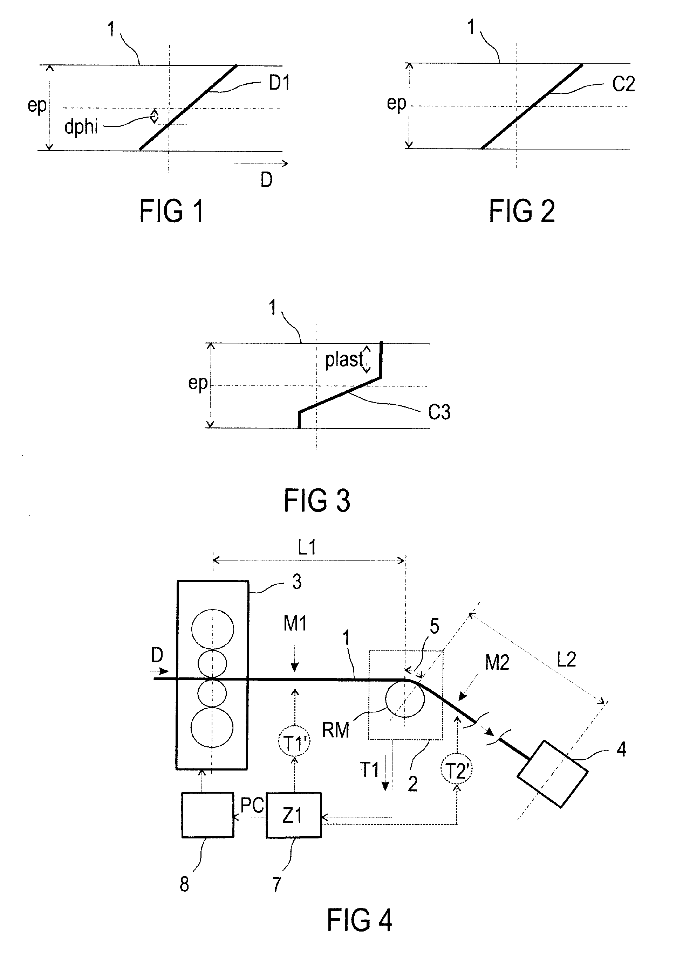

Figure 1 présente un profil de déformation (D1) ponctuelle suivant l'épaisseur (ep) de bande (1) à un point de passage selon une direction longitudinale (D) sur un arc circonférentiel de rouleau mesureur induisant une déflection de la bande dans le sens de défilement. Ce profil représente ainsi un état de déformation où la dite déformation serait linéaire en ce que les brins longitudinaux de bande au plus loin du rouleau sont plus étirés que ceux au plus proche du rouleau qui peuvent aussi être compressés en dessous d'une certaine épaisseur « dphi ».

A la manière de figure 1, figure 2 présente un profil de contrainte (C2) ponctuelle suivant l'épaisseur de bande de type élastique à un point de passage selon une direction longitudinale sur un arc circonférentiel de rouleau mesureur induisant une déflection de la bande dans le sens de défilement. Ce profil représente ainsi un état de contrainte pour un matériau ayant des caractéristiques mécaniques élastiques où la dite contrainte est aussi linéaire en ce que les brins longitudinaux de bande du rouleau subissent des contraintes d'étirement sinon de compression proportionnelles aux déformations imposées (figure 1).

Analogiquement de la figure 2, figure 3 présente un profil de contrainte (C3) ponctuelle suivant l'épaisseur de bande pour un matériau ayant des caractéristiques mécaniques de type plastique ou/et élasto-plastique à un point de passage selon une direction longitudinale sur un arc circonférentiel de rouleau mesureur induisant une déflection de la bande dans le sens de défilement. Sur un intervalle central élastique, la contrainte est de type linéaire comme à la figure 2. Toutefois, à partir d'un certain seuil de déformation imposée, par exemple en étirant plus un brin dans le domaine d'épaisseur (plast), la contrainte devient non-linaire par déformation de la bande de type plastique. Dans ce domaine particulier, un rouleau mesureur ne peut donc plus mesurer un étirement de brin de bande par simple rapport de proportionnalité à une tension « bande-rouleau » mesurée par le rouleau. La mesure de planéité est donc faussée dès que la bande présente au moins un comportement de déformation comparable à un matériau plastique sous contrainte.

A cet effet, figure 4 présente un dispositif en tant que premier mode de réalisation pour la mise en oeuvre de la méthode selon l'invention.

A partir d'une méthode de mesure de planéité d'un produit métallique (1), de type bande en défilement (D) sous traction sur un ensemble (2) de mesure de planéité de type déflecteur dudit produit, idéalement constitué par au moins un rouleau mesureur (RM) induisant une déflection du produit dans le sens de défilement, la mesure de planéité étant effectuée par une mesure de tension longitudinale sur une zone de déflection (5) dudit produit, le produit ayant des propriétés de déformation (D1) au moins plastiques ou élastoplastiques, ladite méthode se caractérise en ce que la mesure de planéité se compose des étapes suivantes :
- une première valeur de mesure de tension longitudinale (T1) est obtenue, sous une forme dite d'état de planéité, au moyen du rouleau mesureur,
- un modèle de contrainte, tel que celui dérivé du profil de contrainte (C3) en figure 3, sur l'épaisseur de la bande est déterminé en fonction de conditions de déformation plastique ou élastoplastique du produit sur le rouleau mesureur dans la zone de déflection,
- un calcul d'un facteur de correction de déformation longitudinale (Z1) du produit est réalisé selon le modèle déterminé de contrainte (C3),
- une valeur corrective (T1', T2') de la première valeur de mesure de tension longitudinale (T1) est calculée à au moins un point d'évaluation (M1, M2) en fonction du facteur de correction de déformation longitudinale (Z1),
- une valeur corrigée de mesure de planéité (PC) est calculée à au moins un des dits points d'évaluation (M1, M2) en prenant en compte la valeur corrective.

La traction de bande en défilement est ici assurée entre une unité de planage ou de laminage (3) en amont du rouleau mesureur (RM) ou/et une autre unité de traction (4) en aval du rouleau mesureur (RM).

Grâce à la prise en compte du modèle de contrainte (connu pour chaque matériau) dans le calcul du facteur de correction de déformation longitudinale, la valeur de tension longitudinale initialement biaisée par des effets non-linéaires de déformation/contrainte sous condition plastique ou/et élasto-plastique peut ainsi être corrigée de façon fort précise. Il en résulte que la valeur corrigée de mesure de planéité (PC) est également une valeur bien réelle et donc plus précise sur l'état de planéité de la bande.

Sous un mode préférentiel de mise en oeuvre de la méthode selon l'invention, il est aussi possible qu'un facteur correctif supplémentaire soit appliqué au calcul de la valeur corrigée de mesure de planéité (PC) en prenant en compte des coordonnées de disposition dimensionnelles relatives à des unités de laminage ou planage (3), de mesure (2) et de traction (4), tels que des espacements (L1, L2,...) entre ces dites unités. De la sorte, des effets de déformation intermédiaires entre les dites unités peuvent être corrigés de manière affinée en les prenant en compte dans le calcul du facteur de correction de déformation longitudinale.

Avantageusement, la méthode selon l'invention prévoit que la valeur corrigée de mesure de planéité (PC) au moyen d'un module de correction (7) est transmise à un module de contrôle de planéité (8) du produit. Le module de contrôle de planéité (8) commande les réglages d'actionneurs de planéité d'une unité de planage ou de laminage (3), idéalement disposée en amont de l'ensemble (2) de mesure de planéité. De cette façon, il est alors possible, au moyen dudit module de contrôle de planéité couplé aux actionneurs d'un équipement de correction de planéité tel qu'une cage de laminage ou autre équipement tel que planeuse située juste en amont du rouleau de mesure, d'ajuster une cible de courbe de planéité transversale réelle souhaitée en sortie des dits équipements de planage ou laminage voire tel qu'en amont ou en aval de l'ensemble de mesure de planéité, même si la bande présente des propriétés plastiques ou élasto-plastiques.

Figure 4 présente ainsi un premier mode de réalisation simple sous forme d'un dispositif de mesure de planéité d'un produit métallique (1) de type bande en défilement sous traction, ledit produit ayant des propriétés de déformation au moins plastique ou élastoplastique, le dit dispositif comprenant un ensemble de mesure de planéité (2) de type déflecteur dudit produit, idéalement constitué par ici par un unique rouleau mesureur (RM) induisant une déflection longitudinale du produit. Le dispositif se caractérise en ce qu'il comprend un module de correction (7) de mesure de planéité auquel au moins une valeur corrigée de mesure de planéité du dit produit à son passage sur au moins le rouleau mesureur est transmise, la dite valeur corrigée étant obtenue par mise en oeuvre de la méthode de mesure selon l'invention.

Ladite méthode permet ainsi une évaluation locale (M1) de la planéité du produit, ladite évaluation étant située à un point en amont du rouleau mesureur (RM) étant calculée en prenant en compte au moins la valeur corrigée de mesure de planéité liée au rouleau mesureur issue de la première valeur de mesure de tension longitudinale (T1) liée au premier facteur correctif (Z1).

La dite méthode permet ainsi aussi une évaluation locale (M2) de la planéité du produit, ladite évaluation étant située à un point en aval du rouleau mesureur (RM) étant calculée en prenant en compte la valeur corrigée de mesure de planéité liée au rouleau mesureur issue de la première valeur de mesure de tension longitudinale (T1) liée au premier facteur correctif (Z1).

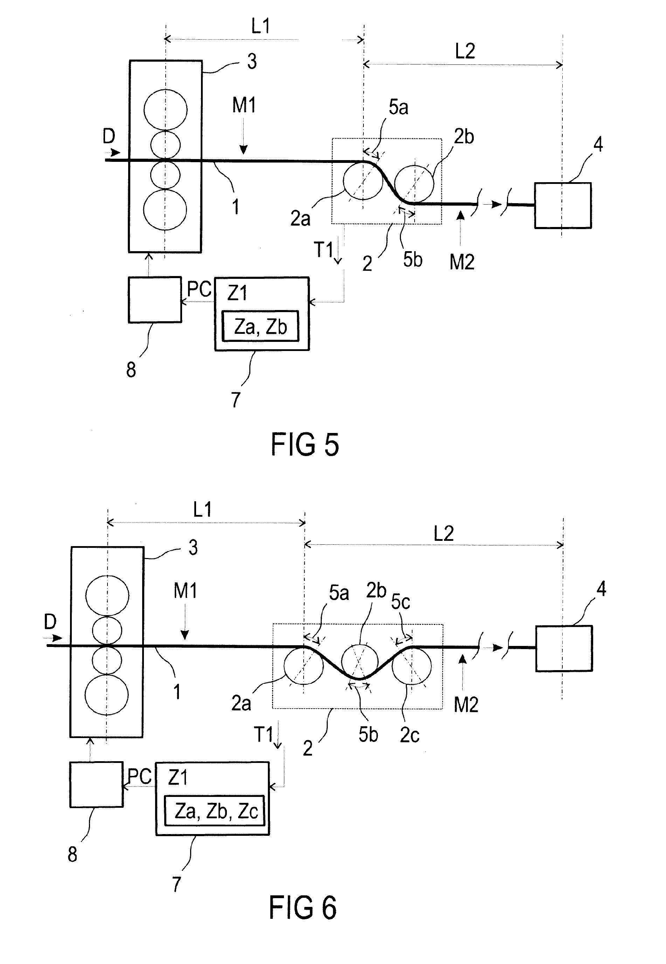

Figure 5 présente un second mode de réalisation sous forme d'un dispositif de mesure de planéité d'un produit métallique (1) de type bande en défilement sous traction selon la figure 4, ledit produit ayant des propriétés de déformation au moins plastique ou élastoplastique.

A la différence de dispositif en figure 4, l'ensemble de mesure de planéité (2) de type bi-défle,cteur dudit produit, idéalement constitué par (au moins) un premier rouleau mesureur (2a ou 2b) induisant une déflection longitudinale du produit, comprend également au moins un deuxième rouleau déflecteur en aval ou en amont du rouleau mesureur afin que la bande présente un défilement parallèle (ici horizontal) en entrée et en sortie de l'ensemble (2).

Le dispositif comprend aussi un module de correction (7) de mesure de planéité auquel au moins une valeur corrigée de mesure de planéité du dit produit à son passage (5a ou 5b) sur au moins le rouleau mesureur est transmise, la dite valeur corrigée étant obtenue par mise en oeuvre de la méthode de mesure selon une des revendications précédentes.

Pour ce deuxième dispositif de mesure de planéité selon figure 5, deux cas de figures se présentent :
a) le second rouleau déflecteur (2a) est disposé en amont du rouleau mesureur (2b).
   Ladite méthode permet ainsi une évaluation locale (M1) de la planéité du produit en ce que ladite évaluation étant située à un point en amont du rouleau mesureur (2b) est calculée en prenant en compte de :
   - la valeur corrigée de mesure de planéité liée au rouleau mesureur issue de la première valeur de mesure de tension longitudinale (T1) liée au premier facteur correctif (Z1 ; Zb),
   - ainsi que chaque valeur corrigée de planéité intermédiaire induite par, si existant, au moins un rouleau déflecteur tel que (2a) disposé en amont du rouleau mesureur et en aval du point de l'évaluation locale (M1), le dit rouleau déflecteur imposant au moins un second facteur correctif (Za) du premier facteur correctif (Z1 ; Zb).
   Ladite méthode permet aussi une évaluation locale (M2) de la planéité du produit, en ce que ladite évaluation étant située à un point en aval du rouleau mesureur (2b) est calculée en prenant en compte de :
   - la valeur corrigée de mesure de planéité liée au rouleau mesureur issue de là première valeur de mesure de tension longitudinale (T1) liée au premier facteur correctif (Z1 ; Zb),
b) le second rouleau déflecteur (2b) est disposé en aval du rouleau mesureur (2a).
   Ladite méthode permet ainsi une évaluation locale (M1) de la planéité du produit en ce que ladite évaluation étant située à un point en amont du rouleau mesureur (2a) est calculée en prenant en compte de :
   - la valeur corrigée de mesure de planéité liée au rouleau mesureur issue de la première valeur de mesure de tension longitudinale (T1) liée au premier facteur correctif (Z1 ; Za).
   Ladite méthode permet aussi une évaluation locale (M2) de la planéité du produit, en ce que ladite évaluation étant située à un point en aval du rouleau mesureur (2a) est calculée en prenant en compte de :
   - la valeur corrigée de mesure de planéité liée au rouleau mesureur issue de la première valeur de mesure de tension longitudinale (T1) liée au premier facteur correctif (Z1 ; Za),
   - chaque valeur corrigée de planéité intermédiaire induite par, si existant, au moins un rouleau déflecteur tel que (2b) ici disposé en aval du rouleau mesureur et en amont du point de l'évaluation locale (M2), le dit rouleau déflecteur imposant au moins un second facteur correctif (Zb) du premier facteur correctif (Z1 ; Za).

En conséquence, le dispositif de mesure de planéité selon figure 5 prévoit que au moins un second rouleau déflecteur (2b ou 2a) est disposé en amont ou en aval du rouleau mesureur (2a ou 2b).

Si au moins le second rouleau déflecteur est disposé en aval du rouleau mesureur, le dit rouleau déflecteur induit une seconde valeur corrigée de planéité à prendre en compte dans le calcul de la valeur corrigée transmise au module de correction (7) si le dit rouleau déflecteur est disposé en amont d'un point d'évaluation de planéité (M2) du produit.

Si au moins le second rouleau déflecteur est disposé en amont du rouleau mesureur, au moins le dit rouleau déflecteur induit une secondet valeur corrigée de planéité à prendre en compte dans le calcul de la valeur corrigée transmise au module de correction (7) si le dit rouleau déflecteur est disposé en aval d'un point d'évaluation de planéité (M1) du produit.

Figure 6 présente enfin un troisième mode de réalisation sous forme d'un dispositif de mesure de planéité d'un produit métallique (1) de type bande en défilement sous traction selon la figure 4 ou 5, ledit produit ayant des propriétés de déformation au moins plastique ou élastoplastique.

A la différence de dispositif en figure 4 ou 5, l'ensemble de mesure de planéité (2) de type tri-déflecteur dudit produit, idéalement constitué par (au moins) un premier rouleau mesureur (2b) induisant une déflection longitudinale du produit, comprend également au moins un deuxième et un troisième rouleaux déflecteurs (2a, 2c) en amont et en aval du rouleau mesureur afin que la bande présente un défilement parallèle (ici horizontal) en entrée et en sortie de l'ensemble (2), idéalement pour une ligne de passe à altitude constante.

Le dispositif comprend aussi un module de correction (7) de mesure de planéité auquel au moins une valeur corrigée de mesure de planéité du dit produit à son passage (ici 5b) sur au moins le rouleau mesureur (2b) est transmise, la dite valeur corrigée étant obtenue par mise en oeuvre de la méthode de mesure selon une des revendications précédentes.

Analogiquement aux cas de figures de la figure 5, le rouleau mesureur pourrait être disposé à la place d'un des autres rouleaux déflecteurs (2a, 2c), auquel cas le principe d'évaluation locale (M1, M2) de la planéité du produit serait déductible de l'exemple d'évaluation ci-dessous.

A ce titre, le dispositif peut prévoir avantageusement que :
- au moins le second rouleau déflecteur est disposé en amont ou en aval du rouleau mesureur ;
- au moins le troisième rouleau déflecteur est disposé en aval ou en amont du rouleau mesureur;
- si au moins un des second ou/et troisième rouleaux déflecteurs est disposé en aval du rouleau mesureur, au moins le dit rouleau déflecteur induit une seconde ou/et troisième valeur corrigée de planéité à prendre en compte dans le calcul de la valeur corrigée transmise au module de correction (7) si le dit rouleau déflecteur est disposé en amont d'un point d'évaluation de planéité (M2) du produit ;
- si au moins un des second ou/et troisième rouleaux déflecteurs est disposé en amont du rouleau mesureur, au moins le dit rouleau déflecteur induit une seconde ou/et troisième valeur corrigée de planéité à prendre en compte dans le calcul de la valeur corrigée transmise au module de correction (7) si le dit rouleau déflecteur est disposé en aval d'un point d'évaluation de planéité (M1) du produit.

Selon ces caractéristiques, toutes.les configurations de dispositifs par permutation des types de rouleaux déflecteur ou mesureur sont décrites, c'est-à-dire selon la figure 6 :
- Rouleau mesureur (2a), second rouleau déflecteur (2b), troisième rouleau déflecteur (2c) ;
- Rouleau mesureur (2b), second rouleau déflecteur (2a), troisième rouleau déflecteur (2c) ;
- Rouleau mesureur (2c), second rouleau déflecteur (2a), troisième rouleau déflecteur (2b).

Ladite méthode mise en oeuvre selon figure 6 permet ainsi une évaluation locale (M1) de la planéité du produit, ladite évaluation étant située à un point en amont du rouleau mesureur (2b) étant calculée en prenant en compte de :
- la valeur corrigée de mesure de planéité liée au rouleau mesureur (2b) issue de la première valeur de mesure de tension longitudinale (T1) liée au premier facteur correctif (Z1 ; Zb),
- ainsi que chaque valeur corrigée de planéité intermédiaire induite par, si existant, au moins un rouleau'déflecteur (2a) disposé en amont du rouleau mesureur et en aval du point de l'évaluation locale (M1), le dit rouleau déflecteur imposant au moins un second facteur correctif (Za) du premier facteur correctif (Z1 ; Zb).

Ladite méthode permet aussi une évaluation locale (M2) de la planéité du produit, en ce que une évaluation locale (M2) de la planéité du produit, ladite évaluation étant située à un point en aval du rouleau mesureur (2b) est calculée en prenant en compte de :
- la valeur corrigée de mesure de planéité liée au rouleau mesureur issue de la première valeur de mesure de tension longitudinale (T1) liée au premier facteur correctif (Z1 ; Zb);
ainsi que chaque valeur corrigée de planéité intermédiaire induite par au moins un rouleau déflecteur (2b, 2c) disposé en aval du rouleau mesureur et en amont du point de l'évaluation locale (M2), le dit troisième rouleau déflecteur (2c) imposant au moins un troisième facteur correctif (Zc) du premier facteur correctif (Z1 ; Zb).

En résumé pour ces derniers cas de figures issues des exemples aux figures 5 et 6 et comparativement à l'exemple de la figure 4, le premier facteur correctif (Z1) est ainsi lui-même corrigé par d'un ou d'autres facteurs correctifs selon la méthode décrite par l'invention sous effet d'une déformation supplémentaire d'au moins un rouleau déflecteur additionnellement disposé en amont ou aval du rouleau mesureur, lui-même imposant des déformations/contraintes non-linéaires sur la bande de type plastique ou élasto-plastique.

Dans tous les modes de réalisation sous forme de dispositif pour mettre en oeuvre la méthode selon l'invention, la valeur corrigée de mesure exacte et locale de planéité (PC) calculée au moyen des facteurs correctifs (Z1, Za, Zb, Zc) est transmise à un module de contrôle de planéité (8) du produit. Le module de contrôle de planéité (8) commande les réglages d'actionneurs de planéité d'une unité de planage ou de laminage (3), idéalement disposée en amont de l'ensemble (2) de mesure de planéité. Il en ressort que les réglages même de l'unité de planage ou de laminage (3) sont mieux réalisées en raison de la mesure plus précise de la planéité en sortie de la dite unité. Finalement, le produit de type plastique ou élasto-plastique entrant dans la dite unité de planage ou de laminage (3) sera donc ainsi mieux plané ou laminé.

La méthode selon l'invention et le dispositif associé ne se limitent pas à aucun, un ou deux rouleaux déflecteurs en plus du rouleau mesureur. Il est bien entendu possible de prévoir trois rouleaux déflecteurs ou plus, auxquels cas les modes de réalisation de ladite méthode et du dispositif selon l'invention tels que précédemment présentés sont aisément déductibles.

## Revendications

1. Méthode de mesure de planéité d'un produit métallique (1), de type bande en.défilement (D) sous traction sur un ensemble (2) de mesure de planéité de type déflecteur dudit produit, idéalement constitué par au moins un rouleau mesureur (RM) induisant une déflection du produit dans le sens de défilement, la mesure de planéité étant effectuée par une mesure de tension longitudinale sur une zone de déflection (5) dudit produit, le produit ayant des propriétés de déformation (D1) au moins plastiques ou élastoplastiques,
**caractérisée en ce que** la mesure de planéité se compose des étapes suivantes :
- une première valeur de mesure de tension longitudinale (T1) est obtenue au moyen du rouleau mesureur, ,
- un modèle de contrainte (C3) sur l'épaisseur de la bande est déterminé en fonction de conditions de déformation plastique ou élastoplastique du produit sur le rouleau mesureur dans la zone de déflection,
- un calcul d'un facteur de correction de déformation longitudinale (Z1) du produit est réalisé selon le modèle déterminé de contrainte (C3),
- une valeur corrective (T1', T2')de la première valeur de mesure de tension longitudinale (T1) est calculée à au moins un point d'évaluation (M1, M2) en fonction du facteur de correction de déformation longitudinale (Z1),
- une valeur corrigée de mesure de planéité (PC) est calculée à au moins un des dits points d'évaluation (M1, M2) en prenant en compte la valeur corrective.

2. Méthode selon revendication 1, pour laquelle un facteur correctif supplémentaire est appliqué au calcul de la valeur corrigée de mesure de planéité (PC) en prenant en compte des coordonnées de disposition dimensionnelles relatives à des unités de laminage ou planage (3), de mesure (2) et de traction (4), tels que des espacements (L1, L2,...) entre ces dites unités.

3. Méthode selon revendication 1 ou 2, pour laquelle la valeur corrigée de mesure de planéité (PC) est transmise à un module de contrôlé de planéité (8) du produit.

4. Méthode selon une des revendications précédentes, pour laquelle le module de contrôle de planéité (8) commande les réglages d'actionneurs de planéité d'une unité de planage ou de laminage (3), idéalement disposée en amont de l'ensemble de mesure de planéité.

5. Méthode selon une des revendications précédentes, pour
laquelle une évaluation locale (M1) de la planéité du produit, ladite évaluation étant située à un point en
amont du rouleau mesureur (RM, 2a, 2b) est calculée en prenant en compte :
- la valeur corrigée de mesure de planéité liée au rouleau mesureur issue de là première valeur de mesure de tension longitudinale (T1) liée au premier facteur correctif (Z1=Za ou Zb),
- ainsi que chaque valeur corrigée de planéité intermédiaire induite par, si existant, au moins un rouleau déflecteur (2a) disposé en amont du rouleau mesureur et en aval du point de l'évaluation locale (M1), le dit rouleau déflecteur imposant au moins un second facteur correctif (Za) du premier facteur correctif (Z1).

6. Méthode selon une des revendications précédentes, pour laquelle une évaluation locale (M2) de la planéité du produit, ladite évaluation étant située à un point en aval du rouleau mesureur (RM, 2a, 2b) est calculée en prenant en compte :
- la valeur corrigée de mesure de planéité liée au rouleau mesureur issue de la première valeur de mesure de tension longitudinale (T1) liée au premier facteur correctif (Z1),
- ainsi que chaque valeur corrigée de planéité intermédiaire induite par au moins un rouleau déflecteur (2b, 2c) disposé en aval du rouleau mesureur et en amont du point de l'évaluation locale (M2), le dit rouleau déflecteur imposant au moins un troisième facteur correctif (Zb, Zc) du premier facteur correctif (Z1).

7. Dispositif de mesure de planéité d'un produit métallique (1) de type bande en défilement sous traction, ledit produit ayant des propriétés de déformation au moins plastique ou élastoplastique, le dit dispositif comprenant un ensemble de mesure de planéité (2) de type déflecteur dudit produit, idéalement constitué par au moins un rouleau mesureur (RM) induisant une déflection longitudinale du produit,
**caractérisé en ce qu'**il comprend un module de correction (7) de mesure de planéité auquel au moins une valeur corrigée de mesure de planéité du dit produit à son passage sur au moins le rouleau mesureur est transmise, la dite valeur corrigée étant obtenue par mise en oeuvre de la méthode de mesure selon une des revendications précédentes.

8. Dispositif de mesure de planéité selon revendication 7, selon lequel au moins un second rouleau déflecteur (2b ou 2a) est disposé en amont ou en aval du rouleau mesureur (2a ou 2b).

9. Dispositif de mesure de planéité selon revendication 7 ou 8, selon lequel au moins un troisième rouleau déflecteur (2c) est disposé en aval ou en amont du rouleau mesureur (2a ou 2b).

10. Dispositif de mesure de planéité selon revendications 8 et 9, pour lequel si au moins un des second ou/et troisième rouleaux déflecteurs est disposé en aval du rouleau mesureur, au moins le dit rouleau déflecteur induit une seconde ou/et troisième valeur corrigée de planéité à prendre en compte dans le calcul de la valeur corrigée transmise au module de correction (7) si le dit rouleau déflecteur est disposé en amont d'un point d'évaluation de planéité (M2) du produit.

11. Dispositif de mesure de planéité selon revendications 8 et 9, pour lequel si au moins un des second ou/et troisième rouleaux déflecteurs est disposé en amont du rouleau mesureur, au moins le dit rouleau déflecteur induit une seconde ou/et troisième valeur corrigée de planéité à prendre en compte dans le calcul de la valeur corrigée transmise au module de correction (7) si le dit rouleau déflecteur est disposé en aval d'un point d'évaluation de planéité (M1) du produit.

12. Dispositif selon revendication 7 à 11 pour laquelle la valeur corrigée de mesure de planéité (PC) est transmise à un module de contrôle de planéité (8) du produit

13. Dispositif de contrôle de planéité selon la revendication 12, selon lequel le module de contrôle de planéité (8) commande les réglages d'actionneurs de planéité d'une unité de planage ou de laminage (3), idéalement disposée en amont de l'ensemble (2) de mesure de planéité.
